# EUROPÄISCHE PATENTANMELDUNG

(11) **EP 4 442 400 A1**
(43) Veröffentlichungstag der Anmeldung: **09.10.2024**
(21) Anmeldenummer: 24155667.9
(22) Anmeldetag: 05.02.2024
(51) Int. Cl.: B23P 6/00, F01D 5/00, F01D 5/18, G05B 19/18, B23H 1/00, B23H 9/08, B23H 9/14, B23P 15/02, B23K 26/342

(54) **VERFAHREN ZUM MATERIALABTRAGENDEN BEARBEITEN EINES BAUTEILS FÜR EINE STRÖMUNGSMASCHINE**

(30) Priorität: 03.03.2023 DE 102023105272
(71) Anmelder: MTU Aero Engines AG, 80995 München (DE)
(72) Erfinder: Zeugner, Maik, 30855 Langenhagen (DE); Brötz, Martin, 30855 Langenhagen (DE); Beyer, Christoph, 30855 Langenhagen (DE)

(57) **Zusammenfassung**

Die vorliegende Erfindung betrifft Verfahren zum materialabtragenden Bearbeiten eines Bauteils (23) für eine Strömungsmaschine (1), umfassend die Schritte:
i) Aufnehmen (61) eines Abstandsbilds (20) durch berührungsloses Vermessen von zumindest einer Oberfläche (21) des zu bearbeitenden Bauteils (23);
ii) Abgleichen des Abstandsbilds (20) mit einem Rechnermodell (30) des Bauteils (23) und Bestimmen zu bearbeitender Stellen (46) des Bau-teils (23) anhand von Abweichungen zwischen dem Abstandsbild (20) und dem Rechnermodell (30);
iii) Erstellen einer Werkzeugbahn (66) für die zu bearbeitenden Stellen (46) des Bauteils (23);
iv) materialabtragendes Bearbeiten (64) des Bauteils (23) anhand der Werkzeugbahn (66) durch Funkenerodieren, Laserbohren oder konventionelles Bohren.

## Beschreibung

### Technisches Gebiet

Die vorliegende Erfindung betrifft ein Verfahren zum materialabtragenden Bearbeiten eines Bauteils einer Strömungsmaschine durch Funkenerodieren, Laserbohren oder konventionelles Bohren.

### Stand der Technik

Beim Funkenerodieren basiert der Materialabtrag auf elektrischen Entladevorgängen zwischen dem Werkzeug, also der Elektrode, und dem elektrisch leitenden Bauteil. Dazu wird die Elektrode in einem Abstand von einigen Mikrometern bis zu Zehntel Millimetern an das Bauteil herangeführt und wird durch Anlegen einer Spannung ein Überschlag (Funken) herbeigeführt. Dies führt zu einem lokalen Aufschmelzen bzw. Verdampfen des Bauteilmaterials und damit zu dem gewünschten Materialabtrag, also Funkenerodieren (auch "EDM", *ElectricalDischarge Machining*)*.* Da der Materialabtrag im Bereich der Elektrode lokalisiert ist, lassen sich gezielt individuelle Stellen des Bauteils bearbeiten, weswegen das Verfahren gut für einen Einsatz im *Repair*-Bereich geeignet ist, also bei der Überarbeitung gebrauchter Bauteile. Weiterhin bekannt sind Laserbohren oder konventionelles Bohren.

### Darstellung der Erfindung

Der vorliegenden Erfindung liegt das technische Problem zugrunde, ein vorteilhaftes Verfahren zum materialabtragenden Bearbeiten eines Bauteils für eine Strömungsmaschine anzugeben.

Dies wird erfindungsgemäß mit dem Verfahren nach Anspruch 1 gelöst. Dabei wird vor der eigentlichen materialabtragenden Bearbeitung,
i) zunächst durch berührungsloses Vermessen von zumindest einer Oberfläche des Bauteils ein Abstandsbild aufgenommen,
ii) dann zur Bestimmung zu bearbeitender Stellen dieses Abstandsbild mit einem Rechnermodell abgeglichen,
iii) und wird schließlich eine Werkzeugbahn für die so ermittelten, zu bearbeitenden Stellen erstellt,
iv) wobei dann das Bearbeitungswerkzeug, also die Elektrode, beim Funkenerodieren entlang dieser Werkzeugbahn bewegt wird oder alternativ Laserbohren oder konventionelles Bohren verwendet wird.

Durch das Erfassen des Ist-Zustands (Schritt i) und den Abgleich mit dem Soll-Zustand (Schritt ii) lässt sich die Werkzeugbahn automatisiert erstellen (Schritt iii), was z. B. bei einer größeren Anzahl zu bearbeitender Stellen bzw. größeren Abweichungen von Bauteil zu Bauteil die Bearbeitungsdauer reduzieren kann. Dies kann im Besonderen bei Bauteilen mit "unterschiedlicher Vorgeschichte" zum Tragen kommen, wenn also der Ist-Zustand von Bauteil zu Bauteil aufgrund der vorhergehenden Bearbeitung und/oder Benutzung unterschiedlich ist. Mit dem Funkenerodieren können bspw. gezielt einzelne Bohrungen einer Reihe/Matrix an Bohrungen freigelegt werden, wobei sich mit den Schritten i) und ii) zuvor die tatsächlich nachzubearbeitenden Bohrungen identifizieren lassen.

Bevorzugte Ausgestaltungen finden sich in den abhängigen Ansprüchen und der gesamten Offenbarung, wobei bei der Darstellung der Merkmale nicht immer im Einzelnen zwischen Verfahrens- und Verwendungs- bzw. Vorrichtungsaspekten unterschieden wird; jedenfalls implizit ist die Offenbarung hinsichtlich sämtlicher Anspruchskategorien zu lesen. Insbesondere ist die Beschreibung von Verfahrensschritten immer auch auf eine Vorrichtung zu lesen, die mit einer Messeinheit, einem Bearbeitungswerkzeug und/oder einem Rechnersystem ausgestattet und zur Durchführung des entsprechenden Verfahrens eingerichtet ist.

Generell handelt es sich bei dem Rechnermodell typischerweise um ein CAD-Modell des Bauteils (*computer-aided design,* CAD). Bevorzugt ist das Rechnermodell dreidimensional, wobei auch die Entfernungsdaten des Abstandsbilds einen dreidimensionalen Verlauf der Oberfläche des Bauteils wiedergeben. Beim Abgleichen werden somit zwei dreidimensionale Flächen aufeinandergelegt.

Zumindest die Verfahrensschritte ii) und iii) können computerimplementiert erfolgen, bevorzugt werden sie in derselben Rechnereinheit vorgenommen. Dabei kann in Schritt ii) bspw. ein Bildverarbeitungsalgorithmus Anwendung finden, der das Abstandsbild mit dem Rechnermodell abgleicht, bspw. im Abstandsbild erfasste Merkmale (z. B. geöffnete Bohrungen, siehe unten) und entsprechende Merkmale des Rechnermodells aufeinander *fitted,* also übereinandergelegt. Bevorzugt erfolgen auch das Aufnehmen des Abstandsbilds und/oder das materialabtragende Bearbeiten automatisiert, wird also mit einer Messeinheit in Schritt i) das Abstandsbild automatisiert aufgenommen und/oder dem Bearbeitungswerkzeug in Schritt iv) das Bauteil automatisiert bearbeitet. Diese Automatisierung kann beispielsweise über einen geeigneten Roboter erfolgen, der idealerweise mit einem geeigneten optischen Sensorsystem ausgestattet ist. Damit könnte ein automatisierter, hochpräzisierter EDM-Prozess realisiert werden.

Die Automatisierung kann bspw. auch dahingehen, dass eine Steuereinheit des Bearbeitungswerkzeugs die Werkzeugbahn von der mit den Schritten ii) und iii) befassten Rechnereinheit empfängt oder letztere das Bearbeitungswerkzeug direkt ansteuert. Ebenso kann die Rechnereinheit der Schritte ii) und iii) das Abstandsbild von der Messeinheit empfangen oder selbst funktionaler Teil der Messeinheit sein, also bspw. ein Abstandsmessgerät direkt ansteuern und auslesen. Die Werkzeugbahn kann als sogenannte numerische Steuerung (*numerical control,* NC) vorliegen und in Schritt iv) eine rechnergestützte numerische Steuerung (*computerized numerical control,* CNC) des Bearbeitungswerkzeugs erlauben.

Das verfahrensgemäß bearbeitete Bauteil ist für eine Strömungsmaschine vorgesehen, insbesondere kann das Bauteil eine gaskanalzugewandte Oberfläche haben, von welcher bevorzugt das Abstandsbild aufgenommen wird. Bevorzugt ist es ein zur Positionierung am bzw. im Heißgaskanal vorgesehenes Bauteil, bspw. eines Turbinenmoduls oder insbesondere der Brennkammer. Vorteilhaft kann es sich bei dem Bauteil um eine Verkleidung (*liner*) handeln, insbesondere um eine Brennkammerverkleidung (*combustor liner*)*.* Solche Bauteile können zum einen mit einer großen Anzahl Bohrungen versehen sein und zum anderen besonderen Beanspruchungen unterliegen, sodass die eingangs erwähnten Vorteile im Besonderen zum Tragen kommen (Automatisierung und Kompensation von Abweichungen von Bauteil zu Bauteil).

In bevorzugter Ausgestaltung wird verfahrensgemäß ein gebrauchtes Bauteil bearbeitet, welches also zuvor bereits in einer Strömungsmaschine, insbesondere einem Flugtriebwerk, genutzt wurde. Das Bauteil kann dann bspw. im Zuge einer Revision ausgebaut und gemäß den Schritten i) bis iv) erfasst und bearbeitet werden. Aufgrund unterschiedlicher Bedingungen im Betrieb können sich selbst bei baugleichen Bauteilen unterschiedliche Abnutzungen ergeben, kann also umgekehrt der durch Erfassen des Ist-Zustands vorgenommene Abgleich vorteilhaft zum Tragen kommen.

In bevorzugter Ausgestaltung ist das in Schritt i) vermessene Bauteil ein zuvor in einem, Löt- und/oder Schweißverfahren bearbeitetes Bauteil. In anderen Worten wird das Bauteil vor den Schritten i) bis iv) bevorzugt beschichtet und/oder geschweißt, insbesondere durch Auftragsschweißen. Bei einer solchen Bearbeitung, die speziell im *Repair-*Bereich Anwendung finden kann, können bspw. an sich vorhandene Bohrungen unbeabsichtigt und bewusst verschlossen werden, was von Bauteil zu Bauteil variieren kann. Dementsprechend gibt es kein vordefiniertes Bohrraster und kann das vorliegende Verfahren vorteilhaft Anwendung finden.

Generell handelt es sich bei den zu bearbeitenden Stellen in bevorzugter Ausgestaltung um Bohrungen, besonders bevorzugt um Durchgangslöcher. Diese können im Allgemeinen eine beliebige Querschnittsform haben, insbesondere kreisrund sein. Aus dem Abstandsbild ergeben sich hierbei zunächst die offenen Bohrungen, wobei aus dem Abgleich mit dem Rechnermodell auf die verschlossenen Bohrungen geschlossen werden kann. Die verschlossenen Bohrungen, und ggf. auch nur teilweise (nicht vollständig) geöffnete Bohrungen, werden dann in die Werkzeugbahn aufgenommen.

Das Bauteil kann insgesamt bspw. mindestens 100, 200, 400, 600 bzw. 800 Bohrungen aufweisen (mögliche Obergrenzen können auch von der Bauteilgröße abhängen, exemplarische Werte liegen bei 10.000, 5.000 bzw. 2.000 Bohrungen).

Gemäß einer bevorzugten Ausführungsform wird auch eine Orientierung der Bohrung bzw. Bohrungen, die in Schritt iv) geöffnet wird/werden, bestimmt und in die Werkzeugbahn übernommen. Die Orientierung der Bohrung kann sich bspw. als Orientierung von deren Mittenachse ergeben, etwa als Winkel und Ausrichtung der Mittenachse relativ zu einer Flächennormalen (auf einer theoretisch geschlossenen Fläche ohne Bohrung). Sie wird aus dem Rechnermodell in die Werkzeugbahn übernommen, diese enthält also zusätzlich zur Position der jeweiligen Bearbeitung auch eine Information über den Anstellwinkel der Elektrode.

In bevorzugter Ausgestaltung wird beim Abgleich von Abstandsbild und Rechnermodell eine Anzahl und/oder ein Muster der Bohrungen berücksichtigt, insbesondere beides. Im Allgemeinen alternativ oder bevorzugt zusätzlich kann auch ein Bohrungsdurchmesser berücksichtigt werden, können also, soweit die Bohrungen unterschiedliche Durchmesser haben, die Durchmesser in Abstandsbild und Rechnermodell verglichen und die beiden so gefittet werden, dass die Durchmesser zueinander passen. Unabhängig davon können auch in der Werkzeugbahn unterschiedliche Durchmesser hinterlegt werden.

Speziell im Hinblick auf gebrauchte Bauteile kann ein Vorteil des vorliegenden Verfahrens auch darin liegen, dass sich durch den Abgleich von Ist- und Soll-Zustand auch etwaige Verformungen des Bauteils berücksichtigen lassen. In anderen Worten können sich der Soll- und Ist-Zustand nicht nur hinsichtlich des Zustands einer jeweiligen Bohrung unterscheiden (offen/geschlossen), sondern kann bzw. können die Bohrungen verformungsbedingt gegenüber dem Rechnermodell auch an anderer Stelle liegen. Mit dem Abgleichen kann in dieser Hinsicht interpoliert werden, wird also das Rechnermodell zunächst beim Fitten an die offenen Bohrungen gedehnt/gestaucht, wobei die zu öffnenden Bohrungen dann in dem entsprechend angepassten (gedehnten/gestauchten) Rechnermodell lokalisiert werden. Zur Anpassung an eine tatsächliche Verformung sind dabei auch Kombinationen möglich, kann das Rechnermodell also bereichsweise gestaucht und in einem anderen Bereich gedehnt werden.

Gemäß einer bevorzugten Ausführungsform wird das Abstandsbild laufzeitbasiert aufgenommen, ergeben sich die Abstandswerte also aus der halben Laufzeit eines von der Messeinheit emittierten Pulses (Laufzeit = Zeitintervall zwischen Emission und Detektion, nach zwischenzeitlicher Reflexion an der Oberfläche). Bei dieser TOF-Messung (*time of flight,* TOF) ergibt sich der Abstandswert dann aus der halben Laufzeit mit der Pulsgeschwindigkeit, die im bevorzugten Fall einer Laser-basierten Abstandsmessung der Lichtgeschwindigkeit c entspricht. Mit dem Laser kann die Bauteiloberfläche bspw. zeilen- bzw. rasterartig abgetastet und kann so sukzessive ein Abstandsbild erfasst werden. Dies lässt sich sowohl bei glänzenden als auch bei matten Oberflächen anwenden.

Gemäß einer bevorzugten Ausführungsform wird die Messeinheit, mit der das Abstandsbild aufgenommen wird, mit demselben Manipulator bewegt, der später in Schritt iv) das Bearbeitungswerkzeug führt. Es wird also zunächst die Messeinheit, insbesondere das Laser-Abstandsmessgerät, am Manipulator platziert und dann nach der Messung durch das Bearbeitungswerkzeug, insbesondere die Bearbeitungselektrode, ersetzt. Dies kann bspw. einen numerischen Konversionsaufwand reduzieren.

Wie eingangs erwähnt, betrifft die Erfindung auch eine Vorrichtung zum materialabtragenden Bearbeiten eines Bauteils. Diese umfasst zunächst die Messeinheit und das Bearbeitungswerkzeug, insbesondere also ein Laser-Messgerät und eine Bearbeitungselektrode zum Funkenerodieren oder eine geeignetes Bohr- oder Laserbohrwerkzeug. Ferner ist ein Rechnersystem Teil der Vorrichtung, welches für eine Durchführung der Verfahrensschritte ii) und iii) eingerichtet ist. In dem Rechnersystem sind also Befehle hinterlegt, die bei Ausführung des Programms das Rechnersystem veranlassen, das Abstandsbild und das Rechnermodell abzugleichen und eine Werkzeugbahn zu erstellen. Bezüglich weiterer Details, sowohl vorrichtungs- als auch verfahrensseitig, wird ausdrücklich auf die vorstehende Offenbarung verwiesen.

In bevorzugter Ausgestaltung ist das Rechnersystem zusätzlich dazu eingerichtet, das Bearbeitungswerkzeug zum Materialabtrag zu veranlassen, insbesondere einen entsprechenden Bearbeitungsspalt zum Bauteil und/oder eine entsprechende elektrische Spannung einzustellen. Ferner ist es dazu eingerichtet, das Bearbeitungswerkzeug mithilfe eines Antriebs bzw. Manipulators entlang der Werkzeugbahn zu bewegen.

In bevorzugter Ausgestaltung umfasst die Vorrichtung einen Portal-Manipulator, an dem das Bearbeitungswerkzeug montierbar bzw. montiert ist. Der eben genannte Antrieb kann generell mehrere Antriebseinheiten umfassen, im Falle des Portal-Manipulator bevorzugt mindestens zwei zur Bewegung in einer Ebene. Bevorzugt kann zusätzlich ein Anstellwinkel, also Zuführwinkel der Elektrode bzw. ihre Vorschubrichtung relativ zu der Ebene einstellbar sein. In einem ortsfesten Koordinatensystem betrachtet kann die Ebene bevorzugt vertikal ausgerichtet sein, kann also mit der Bewegung in der Ebene ein Höhen- und Seitenversatz realisiert werden.

In bevorzugter Ausgestaltung umfasst die Vorrichtung einen Dreh-/Schwenktisch zum Aufspannen des Bauteils für das Vermessen und/oder Bearbeiten, bevorzugt beides. Die Drehachse kann parallel zu der Ebene eines Portal-Manipulators (siehe vorne) und/oder vertikal liegen, jedenfalls im nicht verschwenkten Zustand (Nulllage).

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Strömungsmaschine, nämlich ein Flugtriebwerk in einem schematischen Axialschnitt;
- Figur 2a: in schematischer Darstellung ein Abstandsbild eines Bauteils;
- Figur 2b: in schematischer Darstellung ein Rechnermodell des Bauteils;
- Figur 2c: in schematischer Darstellung einen Abgleich zwischen Abstandsbild und Rechnermodell;
- Figur 3: einige Verfahrensschritte in einem Flussdiagramm;
- Figur 4: eine Vorrichtung zum materialabtragenden Bearbeiten eines Bauteils durch Funkenerodieren und zur Durchführung der Schritte gemäß Figur 3 in schematischer Darstellung.

### Bevorzugte Ausführung der Erfindung

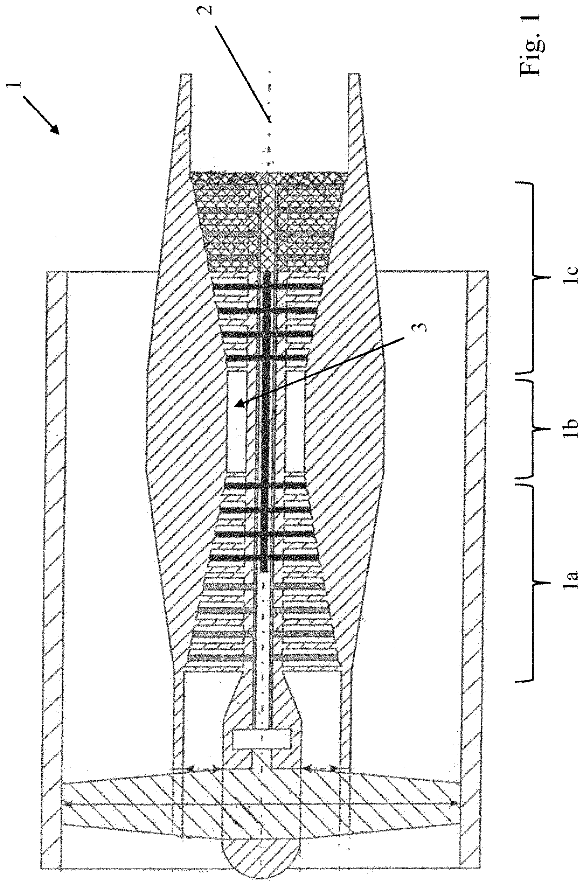

**Figur 1** zeigt eine Strömungsmaschine 1, konkret ein Mantelstromtriebwerk, in einem Axialschnitt. Die Schnittebene beinhaltet also eine Längsachse 2, um welche im Betrieb die Rotoren drehen. Funktional gliedert sich die Strömungsmaschine 1 in Verdichter 1a, Brennkammer 1b und Turbine 1c. Im Betrieb wird im Verdichter 1a angesaugte Luft komprimiert, und sie wird dann in der nachgelagerten Brennkammer 1b mit hinzugemischtem Treibstoff, insbesondere Kerosin, verbrannt. Das entstehende Verbrennungs- bzw. Heißgas wird in der Turbine 1c expandiert und treibt dabei deren Rotoren an, was anteilig auch in eine Rotation von Verdichter 1a und Fan umgesetzt wird.

Der vorliegende Gegenstand richtet sich insbesondere auf die Revision eines solchen Triebwerks, also eine Untersuchung nach einer bestimmten Betriebsdauer. Dabei können speziell die dem Heißgas zugewandten Bauteile von Interesse sein, insbesondere eine hier nur schematisch gezeigte Brennkammerverkleidung 3, auch als *combustion liner* bezeichnet. Ein solches Bauteil kann eine Vielzahl Bohrungen aufweisen, wobei im Zuge der Überarbeitung, insbesondere bei Schweißreparaturen einige davon unbeabsichtigt verschlossen werden können. Im Falle eines *Liners* mit rund 1.200 Bohrungen können typischerweise 100 bis 400 Bohrungen unbeabsichtigt geschlossen werden, wobei von Bauteil zu Bauteil unterschiedliche Bohrungen betroffen sind.

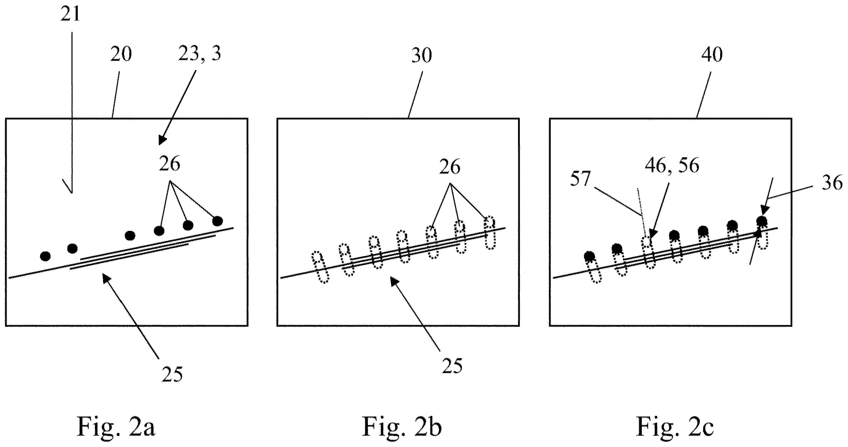

Die verschlossenen Bohrungen werden gemäß dem vorliegenden Verfahren durch Funkenerodieren oder Laserbohren oder konventionelles Bohren geöffnet, wobei zur Erzeugung einer Werkzeugbahn zunächst ein Abstandsbild 20 aufgenommen wird, vgl. Figur 2a zur Illustration. Mit einem Laser-Messgerät wird eine Oberfläche 21 des Bauteils 23, vorliegend also der Brennkammerverkleidung 3, vermessen. In dem resultierenden Abstandsbild 20, das der Übersichtlichkeit halber in Figur 2a nur in einem Ausschnitt gezeigt ist, sind exemplarisch eine Kante 25 und mehrere Bohrungen 26 zu erkennen.

**Figur 2b** zeigt ein Rechnermodell 30 des entsprechenden Ausschnitts, in dem ebenfalls die Kante 25 und insbesondere die Bohrungen 26 zu erkennen sind. Soweit aus dem Abstandsbild 20 jeweils nur die in der Oberfläche 21 mündende Austrittsöffnung zu erkennen ist, enthält das Rechnermodell 30 zusätzlich eine Information über die Erstreckung der Bohrungen 26 im Bauteil, also deren Orientierung.

**Figur 2c** illustriert einen Abgleich 40 zwischen Abstandsbild 20 und Rechnermodell 30. In diesem Schritt wird das Rechnermodell 30 an das Abstandsbild 20 angepasst, wobei Anzahl und Muster der im Abstandsbild 20 erkannten, also geöffneten Bohrungen 26, und ferner auch Bohrungsdurchmesser 36 berücksichtigt werden. Aus dem Abgleich 40 ist eine zu bearbeitende Stelle 46 ersichtlich, wobei nicht nur die Position, sondern auch eine Orientierung 57 berücksichtigt wird. Dort sollte eine Bohrung sein, die aber gemäß dem Abstandsbild 20 geschlossen wurde (bei der vorhergehenden Überarbeitung). Die fehlende Bohrung 56 wird dann nachträglich durch Funkenerodieren eingebracht, siehe unten.

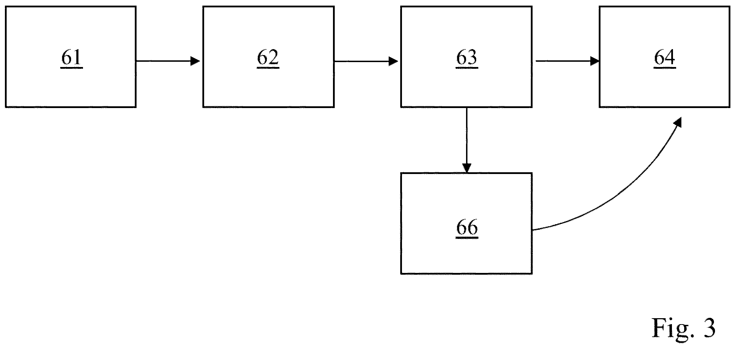

**Figur 3** fasst einige Verfahrensschritte in einem Flussdiagramm zusammen. Nach dem Aufnehmen 61 des Abstandsbilds wird dieses mit dem Rechnermodell abgeglichen 62. Anhand dieses Abgleichs wird eine Werkzeugbahn 66 erstellt 63, entlang welcher anschließend beim materialabtragenden Bearbeiten 64 das Bearbeitungswerkzeug bewegt wird.

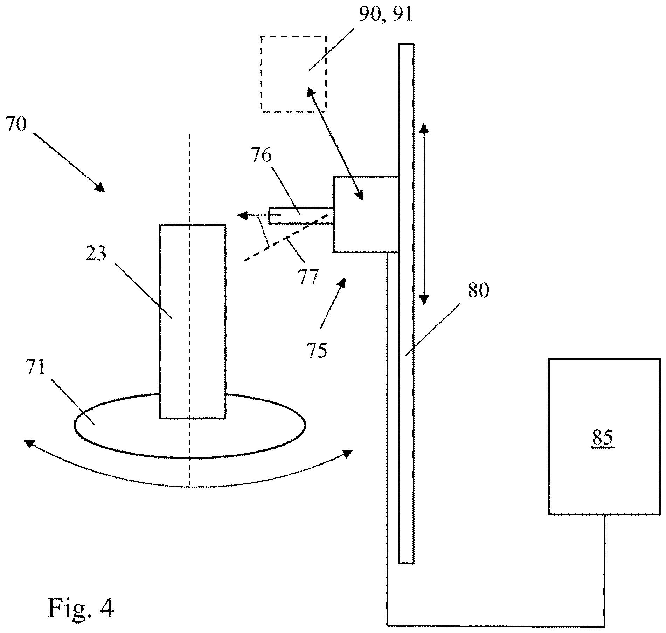

**Figur 4** zeigt in schematischer Darstellung eine Vorrichtung 70 zum materialabtragenden Bearbeiten des Bauteils 23. Dieses ist auf einen Dreh-/Schwenktisch 71 aufgespannt, das Bearbeitungswerkzeug 75 mit der Bearbeitungselektrode 76 ist relativ dazu an einem Portal-Manipulator 80 bewegbar montiert. Dabei ist auch ein Anstellwinkel 77 einstellbar. Gegenstand der Vorrichtung 70 ist ferner ein Rechnersystem 85, in welchem einerseits die anhand der Figuren 2a-c erläuterten Verfahrensschritte ablaufen. Andererseits steuert des Rechnersystem 85 dann auch das Bearbeitungswerkzeug 75 und dessen Bewegung mithilfe des Portal-Manipulators 80 an. Strichliert dargestellt ist eine Messeinheit 90, vorliegend ein Laser-Abstandsmessgerät 91, das vor der materialabtragenden Bearbeitung anstelle des Bearbeitungswerkzeugs 75 an dem Portal-Manipulator 80 montiert wird (also in Figur 4 bereits durch das Bearbeitungswerkzeug 75 ausgetauscht wurde).

### BEZUGSZEICHENLISTE

| | | |
|---|---|---|
| Strömungsmaschine | | 1 |
| | Verdichter | 1a |
| | Brennkammer | 1b |
| | Turbine | 1c |
| Längsachse | | 2 |
| Brennkammerverkleidung | | 3 |
| Abstandsbild | | 20 |
| Oberfläche | | 21 |
| Bauteil | | 23 |
| Kante | | 25 |
| Bohrungen | | 26 |
| Rechnermodell | | 30 |
| Abgleich | | 40 |
| zu bearbeitende Stelle | | 46 |
| fehlende Bohrung | | 56 |
| Orientierung | | 57 |
| Aufnahme / Laser-Abstandsmessung? | | 61 |
| Abgleich | | 62 |
| Erstellung | | 63 |
| materialabtragendes Bearbeiten | | 64 |
| Werkzeugbahn | | 66 |
| Vorrichtung | | 70 |
| Dreh-/Schwenktisch | | 71 |
| Bearbeitungswerkzeug | | 75 |
| Bearbeitungselektrode | | 76 |
| Anstellwinkel | | 77 |
| Portal-Manipulator | | 80 |
| Rechnersystem | | 85 |
| Messeinheit | | 90 |
| Laser-Abstandsmessgerät | | 91 |

## Patentansprüche

1. Verfahren zum materialabtragenden Bearbeiten eines Bauteils (23) für eine Strömungsmaschine (1),
umfassend die Schritte:
i) Aufnehmen (61) eines Abstandsbilds (20) durch berührungsloses Vermessen von zumindest einer Oberfläche (21) des zu bearbeitenden Bauteils (23);
ii) Abgleichen des Abstandsbilds (20) mit einem Rechnermodell (30) des Bauteils (23) und Bestimmen zu bearbeitender Stellen (46) des Bauteils (23) anhand von Abweichungen zwischen dem Abstandsbild (20) und dem Rechnermodell (30);
iii) Erstellen einer Werkzeugbahn (66) für die zu bearbeitenden Stellen (46) des Bauteils (23);
iv) materialabtragendes Bearbeiten (64) des Bauteils (23) anhand der Werkzeugbahn (66) durch Funkenerodieren, Laserbohren oder konventionelles Bohren.

2. Verfahren nach Anspruch 1, bei welchem das zu bearbeitende Bauteil (23) ein gebrauchtes Bauteil (23) ist und im Zuge einer Überholung materialabtragend bearbeitet wird.

3. Verfahren nach Anspruch 1 oder 2, bei welchem das zu bearbeitende Bauteil (23) vor Schritt i) in einem , Löt- und/oder Schweißverfahren bearbeitet wurde, insbesondere durch Riss- und/oder Auftragsschweißen.

4. Verfahren nach einem der vorstehenden Ansprüche, bei welchem eine zu bearbeitende Stelle (46) eine Bohrung (56) ist, deren Position in Schritt ii) bestimmt wird.

5. Verfahren nach Anspruch 4, bei welchem in Schritt ii) zusätzlich eine Orientierung (57) der Bohrung (56) bestimmt wird und in die Werkzeugbahn (66) übernommen wird.

6. Verfahren nach einem der vorstehenden Ansprüche, bei welchem das zu bearbeitende Bauteil (23) eine Mehrzahl Bohrungen (26) aufweist, wobei das Abstandsbild (20) und das Rechnermodell (30) in Schritt ii) anhand der Bohrungen (26) ausgerichtet werden.

7. Verfahren nach Anspruch 6, bei welchem in Schritt ii) eine Anzahl, ein Durchmesser (36) und/oder ein Muster der Bohrungen (26) berücksichtigt werden.

8. Verfahren nach Anspruch 6 oder 7, bei welchem das Rechnermodell (30) in Schritt ii) in Anpassung an das Abstandsbild (20) gedehnt und/oder gestaucht wird, wobei die zu bearbeitende Stelle (46) in dem gedehnten und/oder gestauchten Abstandsbild (20) ermittelt wird.

9. Verfahren nach einem der vorstehenden Ansprüche, bei welchem das Abstandsbild (20) in Schritt i) mit einer laufzeitbasierten Abstandsmessung aufgenommen wird (61), insbesondere mit einer Laser-Abstandsmessung.

10. Verfahren nach einem der vorstehenden Ansprüche, bei welchem eine Messeinheit (90), mit welcher in Schritt i) das Abstandsbild (20) aufgenommen wird, und ein Bearbeitungswerkzeug (75), mit welchem das Bauteil (23) in Schritt iv) materialabtragend bearbeitet wird, mit demselben Manipulator (80) bewegt werden.

11. Vorrichtung (70) zum materialabtragenden Bearbeiten eines Bauteils (23) für eine Strömungsmaschine (1), mit
einer Messeinheit (90) zum Aufnehmen (61) eines Abstandsbilds (20) durch berührungsloses Vermessen von zumindest einer Oberfläche (21) des zu bearbeitenden Bauteils (23),
einem Bearbeitungswerkzeug (75) zum materialabtragende Bearbeiten des Bauteils (23) durch Funkenerodieren Laserbohren oder konventionelles Bohren, und
einem Rechnersystem (85), welches dazu eingerichtet ist,
- das Abstandsbild (20) mit einem Rechnermodell (30) des Bauteils (23) abzugleichen und zu bearbeitende Stellen (46) des Bauteils (23) anhand von Abweichungen zwischen dem Abstandsbild (20) und dem Rechnermodell (30) zu bestimmen,
- eine Werkzeugbahn (66) für die zu bearbeitenden Stellen (46) des Bauteils (23) zu erstellen.

12. Vorrichtung (70) nach Anspruch 11, bei welcher das Rechnersystem (85) zusätzlich dazu eingerichtet,
- das Bearbeitungswerkzeug (75) zu der materialabragenden Bearbeitung (85) zu veranlassen, und
- einen Manipulator (80) dazu zu veranlassen, das Bearbeitungswerkzeug (75) entlang der Werkzeugbahn (66) zu bewegen.

13. Vorrichtung (70) nach Anspruch 11 oder 12, mit einem Portal-Manipulator (80) zum Führen des Bearbeitungswerkzeugs (75).

14. Vorrichtung (70) nach einem der Ansprüche 11 bis 13, mit einem Dreh-/Schwenktisch (71) zum Aufspannen des zu bearbeitenden Bauteils (23) für das Vermessen und/oder materialabtragende Bearbeiten (64).
